Europäisches Patentamt

European Patent Office

Office européen des brevets

(11) Veröffentlichungsnummer: **0 283 703**

**A1**

## (12) EUROPÄISCHE PATENTANMELDUNG

(21) Anmeldenummer: **88102065.5**

(22) Anmeldetag: **12.02.88**

(51) Int. Cl.4 **B01J 49/00**

(30) Priorität: **07.03.87 DE 3707351**

(43) Veröffentlichungstag der Anmeldung:
**28.09.88 Patentblatt 88/39**

(84) Benannte Vertragsstaaten:
**AT BE CH DE ES FR GB GR IT LI LU NL SE**

(71) Anmelder: **Deutsche Carbone AG**
**Talstrasse 112 Postfach 56 02 09**
**D-6000 Frankfurt am Main 56(DE)**

(72) Erfinder: **Klein, Klaus, Ing. grad.**
**Feldstrasse 24**
**D-3360 Osterode Harz(DE)**

(74) Vertreter: **Gudel, Diether, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Grosse Eschenheimer Strasse 39**
**D-6000 Frankfurt am Main 1(DE)**

(54) **Verfahren zum Regenerieren von Ionenaustauschern.**

㊄ Beschrieben wird ein Verfahren zum Regenerieren von Ionenaustauschern, die man in einer Reihe anordnet, wobei der erste Austauscher der Reihe mit einer Regenerierlösung beaufschlagt wird und das Eluat dieses ersten Ionenaustauschers dem zweiten Ionenaustauscher der Reihe zugeleitet wird und so fort. Die erfindungsgemäße Verfahrensführung zeichnet sich durch einen geringen Regeneriermittelverbrauch und durch ein geringes Abwasservolumen aus.

EP 0 283 703 A1

## Verfahren zum Regenerieren von Ionenaustauschern

Die Erfindung betrifft ein Verfahren zum Regenerieren von Ionenaustauschern durch Beaufschlagen der Ionenaustauscher mit einer Regenerierlösung, wobei man mehrere der Ionenaustauscher vorsieht und in einer Reihenschaltung anordnet, der erste der Ionenaustauscher der Reihe mit der Regenerierlösung beaufschlagt wird, das Eluat des ersten Ionenaustauschers dem zweiten Ionenaustauscher zugeleitet wird und so fort bis zum letzten Ionenaustauscher der Reihe und daß Restlösungen aus der Beladungsphase, die das aufzufangende bzw. weiterzuleitende Eluat verdünnen würden, aus dem System verdrängt werden, so daß für den darauffolgenden, zu regenerierenden Austauscher der Reihe eine möglichst hohe Regenerierkonzentration erreicht wird.

Ionenaustauscher werden überall dort eingesetzt, wo dissoziierte Ionen (Kationen und Anionen) aus wässrigen Lösungen entfernt werden sollen. Als Endprodukt kann dabei ein entsalztes Wasser erzeugt werden, wenn Kationen und Anionen entfernt werden, oder eine metallarme,saure Lösung, wenn nur die Kationen entfernt werden.

Wenn die Austauschkapazität der Ionentauscherharze erschöpft ist, müssen diese mit Säure bzw. Lauge regeneriert werden, und zwar mit einem Regeneriermittelüberschuß, der etwa der zwei-bis dreifachen stöchiometrischen Menge entspricht. Ionenaustauscher belasten daher das Abwasser mit einer Salzfracht, die einem Vielfachen der primär getauschten Salze entspricht.

Zum Stand der Technik wird auch verwiesen auf die DE-A-20 27 901, die ein Verfahren mit den eingangs genannten Merkmalen beschreibt. Dort sind die Ionentauscher in einer Reihenschaltung derart miteinander verbunden, daß das Eluat des jeweils vorhergehenden Ionentauschers dem nachgeschalteten Ionentauscher zugeleitet wird.

Auch dieses bekannte Verfahren, von dem die Erfindung ausgeht, ist daher, insbesondere bezüglich des Verbrauchs an Regeneriermittel, nicht optimiert.

Der Erfindung liegt demgegenüber die Aufgabe zugrunde, die Verfahrensführung so zu verbessern, daß der Regeneriermittelverbrauch fühlbar verringert wird, so daß man mit einem fühlbar kleineren Abwasservolumen auskommt.

Zur Lösung dieser Aufgabe ist die Erfindung dadurch gekennzeichnet, daß die Regenerierungskonzentration für den ersten Austauscher der Reihe so gewählt wird, daß der erforderliche Überschuß an Regeneriermitteln für den zweiten und jeden weiteren Austauscher bereits bei der Regeneration des ersten Austauschers dosiert wird, daß der erforderliche Regeneriermittelüberschuß vor den zu regenerierenden Austauschern konditioniert wird und daß das Eluat des letzten Austauschers der Reihe direkt über eine Retardationsanlage geführt und dabei das überschüssige Regeneriermittel zurückgewonnen wird.

Mit der nachfolgend beschriebenen Erfindung kann der Nachteil herkömmlicher Ionenaustauscher ganz entscheidend verbessert werden, so daß die Salzfracht des Eluats nur unwesentlich über der stöchiometrisch erforderlichen Menge liegt. Das erfindungsgemäße Verfahren entlastet daher das Abwasser und ist ein aktiver Beitrag zum Umweltschutz.

Das erfindungsgemäße Verfahren geht davon aus, daß statt eines großen Austauschers zwei oder mehrere Austauscher installiert werden, die zusammen die gleiche Kapazität eines großen Austauschers aufweisen.

Bei der Beladung können diese Austauscher parallel oder in Serie betrieben werden. Die Erfindung bezieht sich auf die Regeration der Austauscher, die nun wie folgt durchgeführt wird:

- Beaufschlagen des ersten Austauschers mit Regenerierlösung. Dabei wird die im Austauscher befindliche Restlösung aus der Beladungsphase verdrängt.
- Sobald aus dem ersten Austauscher das Eluat austritt, wird dieses direkt in den nächsten Austauscher oder aber auch ineinen Auffangbehälter geleitet. Das Eluat wird solange über den nächsten Austauscher geleitet, bis die Verdünnung des Eluats durch "langsames Waschen" einsetzt.

Durch die erfindungsgemäße Verfahrensführung wird der Regeneriermittelverbrauch fühlbar verringert und man kommt mit einem fühlbar kleinerem Abwasservolumen aus.

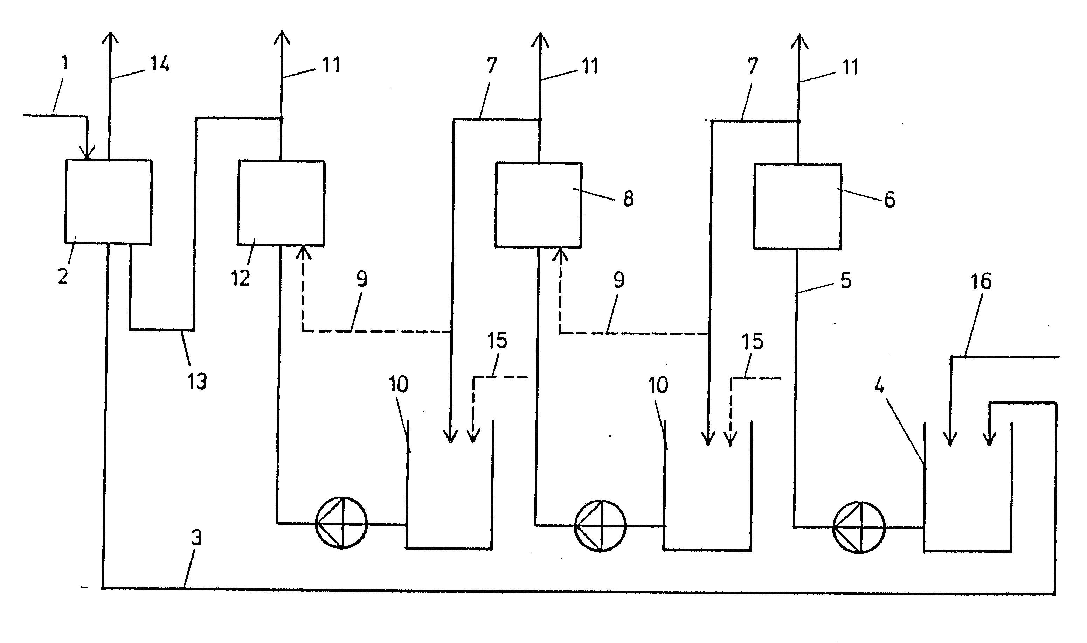

Die Unteransprüche sind auf bevorzugte Ausgestaltungen der Erfindung gerichtet. Diese wird im folgenden anhand eines Ausführungsbeispiels näher erläutert, aus dem sich weitere wichtige Merkmale ergeben. Die Figur zeigt anhand einer Skizze den Verfahrensablauf.

Zu regenerierendes Wasser wird über eine Leitung 1 in einen Behälter 2 geleitet, in dem sich ein Retardationsmittel befindet. Von dort gelangt das Wasser über eine Leitung 3 in eine erste Vorlage 4 für ein Regeneriermittel, beispielsweise HCl. Von dort gelangt das Wasser mit Vorlage über eine Leitung 5 in einen ersten Ionenaustauscher 6 (Kationenaustauscher).

Das Eluat des ersten Austauschers 6 gelangt über eine weitere Leitung 7 zu einem zweiten Austauscher 8, und zwar direkt über eine Leitung 9 oder über eine zweite Vorlage 10 für Regeneriermittel. Über eine Leitung 11 wird das Verdrängungsvolumen des ersten Austauschers 6 abgeleitet.

Dieses Schema wiederholt sich gegebenenfalls und zeichnerisch ist als Beispiel ein dritter und letzter Austauscher 12 (n-ter Austauscher) gezeigt, dessen Eluat über eine Leitung 13 in den Behälter 2 mit dem Retardationsmittel geleitet wird, den das Eluat über eine Leitung 14 als Abwasser verläßt.

Den Vorlegebehältern 10 kann über eine Leitung 15 gegebenenfalls ebenfalls HCl zugeführt werden, wie dies über die Leitung 16 bezüglich des ersten Vorlagebehälters 4 schon der Fall ist.

Mit der erfindungsgemäßen Verfahrensweise lassen sich, wie die nachfolgende Kalkulation beweist, bedeutende Vorteile erzielen: Als Beispiel wurde ein Kationenaustauscher zugrundegelegt, der mit Salzsäure regeneriert wird.

Tabelle 1:  Gegenüberstellung herkömmlicher Verfahren
mit dem erfindungsgemäßen Verfahren in Bezug
auf Regenriermittelverbrauch.

| | Austauscherleistung | Säureverbrauch pro Regeneration (1) | Säureverbrauch stöchiometrisch (1) | Säureüberschuß (1) |
|---|---|---|---|---|
| herkömmliches Verfahren | 50 Val | 10 * | 4 | 6 |
| | 125 Val | 24 * | 9.6 | 14,4 |

Tabelle 2: Säureverbrauch nach N-Regenerationen

| | Austauscherleistung | Säureverbrauch pro Regeneration (1) | Säureverbrauch stöchiometrisch (1) | Säureüberschuß (1) |
|---|---|---|---|---|
| erfindungsgemäßes Verfahren | 1. Tauscher 50 Val | 10 | 4 | 6 |
| | 2. Tauscher 50 Val | 10 1 - 6 1 Überschuß = 4 1 | 8 | 6 |
| | 3. Tauscher 50 Val | 10 1 - 6 1 Überschuß = 4 1 | 12 | 6 |

Tabelle 3: Regeneriermitteleinsparung nach erfindungsgemäßem Verfahren

| | Leistung in x Val | Säureverbrauch pro Regeneration (1) | herkömmlicher Säureverbrauch bezogen auf x Val (1) | Mehrverbrauch herkömmlicher Art % |
|---|---|---|---|---|
| | 2 Tauscher a 50 Val = 100 Val | 14 | 19,5 | 40 |
| | 3 Tauscher a 50 Val = 150 Val | 18 | 29 | 60 |

Tabelle 4:    Säureverbrauch mit Retardation

| Leistung in x Val | Säurever- brauch pro Regeneration (1) | herkömmlicher Säureverbrauch bezogen auf x Val (1) | Mehrverbrauch herkömmlicher Art % |
|---|---|---|---|
| 2 Tauscher a 50 Val = 100 Val | 8 | 19,5 | 140 |
| 3 Tauscher a 50 Val = 150 Val | 12 | 29 | 140 |

\*) Quelle:    Kreislaufanlagen Gebrüder Heck GmbH

Wie man aus den oben gezeigten Beispielen ersieht, werden mit einem Regeneriervolumen zwei oder mehr Austauscher regeneriert. Das bedeutet, daß die Abwassermenge mit dem erfindungsgemäßen Verfahren auf ca. die Hälfte bzw. $\frac{1}{n}$ reduziert wird, was sich weiterhin günstig auf die Entsorgung der Eluate auswirkt (n = Anzahl der verwendeten Austauscher).

Wie das Beispiel in Tabelle 1 zeigt, wird auch nach n Regenerationen ein konstanter Regeneriermittelüberschuß im Beispiel 6 l, benötigt. Im Falle der Regeneration mit Kationen-Austauschern kann dieser Säureüberschuß mittels Säureretardation (RECOPUR-Anlagen) zurückgewonnen werden.

Dafür wird das Eluat des n-ten Austauschers direkt ohne einen Zwischenbehälter über ein Retardations-Harzbett geleitet.

In diesem Harzbett wird freie Säure und Metallsalz voneinander getrennt, in der Art, daß die Säure vom Harz adsorbiert wird. Das Metallsalz verläßt dieses Harzbett unbeeinflußt und ist bis auf wenige Gramm /l frei von freier Säure.

Die im Harzbett adsorbierte freie Säure wird im Gegenstrom mit Wasser eluiert und im ersten Kationenaustauscher nach entsprechender Konditionierung wieder zur Regeneration zur Verfügung gestellt.

**Ansprüche**

1. Verfahren zum Regenerieren von Ionenaustauschern durch Beaufschlagen der Ionenaustauscher mit einer Regenerierlösung, wobei man mehrere der Ionenaustauscher vorsieht und in einer Reihenschaltung anordnet, der erste der Ionenaustauscher der Reihe mit der Regenerierlösung beaufschlagt wird, das Eluat des ersten Ionenaustauschers dem zweiten Ionenaustauscher zugeleitet wird und so fort bis zum letzten Ionenaustauscher der Reihe und daß Restlösungen aus der Beladungsphase, die das aufzufangende bzw. weiterzuleitende Eluat verdünnen würden, aus dem System verdrängt werden, so daß für den darauffolgenden, zu regenerierenden Austauscher der Reihe eine möglichst hohe Regenerierkonzentration erreicht wird, **dadurch gekennzeichnet,** daß die Regenerierungskonzentration für den ersten Austauscher der Reihe so gewählt wird, daß der erforderliche Überschuß an Regeneriermitteln für den zweiten und jeden weiteren Austauscher bereits bei der Regeneration des ersten Austauschers dosiert wird, daß der erforderliche Regeneriermittelüberschuß vor den zu regenerierenden Austauschern konditioniert wird und daß das Eluat des letzten Austauschers der Reihe direkt über eine Retardationsanlage geführt und dabei das überschüssige Regeneriermittel zurückgewonnen wird.

2. Verfahren nach Anspruch 1, **dadurch gekennzeichnet,** daß das Eluat des vorherigen Austauschers direkt in den darauf folgenden Austauscher der Reihe geleitet wird.

3. Verfahren nach Anspruch 1, **dadurch gekennzeichnet,** daß das Eluat des vorherigen Austauschers der Reihe in einem Sammelbehälter aufgefangen wird, bevor es für die Regeneration des folgenden Austauschers der Reihe benutzt wird.

0 283 703

| | Europäisches Patentamt | EUROPÄISCHER RECHERCHENBERICHT | Nummer der Anmeldung |
| --- | --- | --- | --- |

EP 88 10 2065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| --- | --- | --- | --- |
| Y | DE-A-1 517 376 (BRAN & LÜBBE) * Seite 3, Absatz 3; Seite 4, Absatz 1 * | 1,3 | B 01 J 49/00 |
| A | * Figur * | 2 | |
| | --- | | |
| Y | DE-A-1 642 851 (METALLGESELLSCHAFT AG) * Anspruch 5 * | 1 | |
| | --- | | |
| Y | US-A-2 660 558 (W. JUDA) * Figur 2, Positionen 18',18''; Spalte 4, Zeile 66 - Spalte 5, Zeile 11 * | 3 | |
| | --- | | |
| A,D | DE-A-2 027 901 (SYBRON CORP.) | | |
| | ----- | | |

**RECHERCHIERTE SACHGEBIETE (Int. Cl.4)**

B 01 J
C 02 F

Der vorliegende Recherchenbericht wurde für alle Patentansprüche erstellt

| Recherchenort | Abschlußdatum der Recherche | Prüfer |
| --- | --- | --- |
| DEN HAAG | 12-07-1988 | OSWALD |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)